# EUROPÄISCHE PATENTSCHRIFT

(11) **EP 0 662 577 B1**
(45) Veröffentlichungstag und Bekanntmachung des Hinweises auf die Patenterteilung: **22.01.1997**
(21) Anmeldenummer: 94117961.6
(22) Anmeldetag: 15.11.1994
(51) Int. Cl.: F16K 31/60, F16K 11/078

(54) **Betätigungseinrichtung für ein Einhebelmischventil**
Actuating device for a single-lever mixing valve
Dispositif de commande pour une vanne mitigeuse à levier unique

(30) Priorität: 30.11.1993 DE 4340712; 24.06.1994 DE 4422125; 24.06.1994 DE 4422126
(43) Veröffentlichungstag der Anmeldung: 12.07.1995
(73) Patentinhaber: FRIEDRICH GROHE AKTIENGESELLSCHAFT, D-58675 Hemer (DE)
(72) Erfinder: Hirsch, Heinz, D-59494 Soest (DE); Bechte, Veit, D-59439 Holzwickede (DE); Faust, Günter, D-58730 Fröndenberg (DE); Gäbel, Gunter, D-58640 Iserlohn (DE)

(56) Entgegenhaltungen:
- EP-A- 0 309 443
- EP-A- 0 568 013
- WO-A-94/19630
- DE-A- 3 607 349
- DE-A- 3 632 220
- DE-A- 3 719 410
- DE-A- 3 822 217

## Beschreibung

Die Erfindung betrifft eine Betätigungseinrichtung für ein Einhebelmischventil, insbesondere für Wasserleitungen im Sanitärbereich, mit einem in zwei Freiheitsgraden bewegbaren Ventilglied zur Bestimmung des Mischungsverhältnisses und der Gesamtdurchflußmenge, wobei Anschlagmittel zur Bewegungsbegrenzung des Ventilglieds vorgesehen sind, bei denen wenigstens eine Begrenzung von einem einen überwindbaren Widerstand erzeugenden Anschlagmittel erfolgt, und zur Ventilbetätigung ein mit dem Ventilglied verbundener, aus einem die Ventilelemente enthaltendes Mischventilkartuschengehäuse herausgeführter, koaxial zur Mittelachse drehbarer und zu einer quer zur Mittelachse liegenden Achse verschwenkbarer, im Querschnit im wesentlichen quadratisch oder rechteckig ausgebildeter Stellhebel vorgesehen ist.

Derartige Betätigungsvorrichtungen sind aus den deutschen Offenlegungsschriften DE 37 19 410 A1 und DE 38 22 217 A1 bekannt. Bei den beiden vorbekannten Vorrichtungen ist der überwindbare Anschlag im Innern des Mischventils angeordnet und muß bei der Erstellung des Mischventils mit einmontiert werden. Ein nachträglicher Einbau oder ein wahlweises Einsetzen des überwindbaren Anschlags ist nicht vorgesehen.
Darüber hinaus ist bei den vorbekannten Einrichtungen der überwindbare Anschlag mit einem relativ kleinen Hebelarm nahe bei der Schwenkachse vorgesehen, so daß für eine vom Benutzer spürbare Rastung am Anschlag relativ hohe Anpresskräfte des Rastmittels erforderlich werden lassen, was zu einem vorzeitigen Verschleiß des Rastmittels führen kann.

In der älteren, nicht vorveröffentlichten Patentanmeldung WO-A-94 19 630 ist außerdem eine Anschlagausbildung offenbart, deren überwindbarer Widerstand im Bereich des Stellhebelaustritts am Mischventilkartuschengehäuse angeordnet ist. Der Stellhebel weist keine vorstehenden Knaggen oder einspringenden Nuten auf, welche mit einen überwindbaren Widerstand erzeugenden Anschlagmitteln zusammenwirken.

Der Erfindung liegt die Aufgabe zugrunde, das eingangs angegebene gattungsgemäße Einhebelmischventil zu verbessern und insbesondere mit einfachen Mitteln eine über eine relativ lange Gebrauchsdauer gleichmäßig wirkende Anschlagausbildung für eine oder mehrere überwindbare Rastungen des Stellhebels am Mischventil zu schaffen. Hierbei gehört es mit zur Aufgabe, die überwindbare Anschlagausbildung so auszulegen und anzuordnen, daß sie leicht austauschbar und nachrüstbar ist.

Diese Aufgabe wird mit den Merkmalen des Anspruchs 1 gelöst.
Weitere Ausgestaltungen der Erfindung sind in den Ansprüchen 2 bis 25 angegeben.

Die mit der Erfindung erzielbaren Vorteile bestehen insbesondere darin, daß die Rasteinrichtung außen an der Mischventilkartusche angeordnet und somit relativ einfach zugänglich ist. Sie kann daher wahlweise eingesetzt und ausgetauscht werden. Durch die außen am Mischventilkartuschengehäuse angeordnete Rasteinrichtung entsteht außerdem ein verhältnismäßig großer Abstand zur Schwenkachse, so daß an der überwindbaren Anschlagausbildung nur relativ kleine Reibkräfte für eine vom Benutzer spürbare Verrastung auftreten und somit ein entsprechend geringer Verschleiß auftritt. Vorzugsweise wird hierbei der Stellhebel besonders verschleißfest ausgebildet, so daß gegebenenfalls nach einem Verschleißen nur die außen am Mischventilkartuschengehäuse angeordnete Anschlagausbildung auszuwechseln ist.

In weiterer Ausgestaltung der Erfindung können Mittel vorgesehen werden, mit denen der Stellhebel des Einhebelmischventils wahlweise mit Knaggen für die überwindbare Rastung ausrüstbar ist. Mit dem als Hülse vorgeschlagenen Mittel wird insbesondere erreicht, daß diese bei abgenommenem Griff einfach auf den Stellhebel aufgesteckt werden kann, so daß wahlweise durch ein Aufstekken oder Entfernen die überwindbare Rastung in Betrieb oder außer Betrieb genommen werden kann. Auch ermöglicht die erfindungsgemäße Hülse einen nachträglichen Einsatz bei bereits installierten Einhebelmischventilen, ohne daß eine Demontage der Mischventilkartusche bzw. ein Auswechseln des Stellhebels erforderlich ist.
Die Hülse kann vorteilhaft aus Kunststoff im Spritzgießverfahren hergestellt werden, wobei zweckmäßig an der Hülse ein oder zwei Stege angeformt sind, mit denen die Hülse in der Stecklage axial an der horizontalen Schwenkachse des Stellhebels abgestützt wird, während in der entgegengesetzten Richtung die Abstützung durch den Handgriff des Einhebelmischventils erfolgen kann.
Alternativ kann auch die Hülse einstückig mit einer Isolierkappe ausgebildet werden, die zur Wärmeisolierung zwischen dem Handgriff und dem Stellhebel angeordnet ist, wobei der aufgesetzte Handgriff die Isolierkappe axial auf dem Stellhebel fixiert.

Vorteilhaft können auch die seitlich an der Hülse angeordneten Knaggen zur Mittelachse versetzt angeordnet sein, so daß durch zwei um 180° gedrehte Stecklagen der Hülse auf dem Stellhebel zwei unterschiedliche Schwenkwinkel bis zum Anschlag an die überwindbare Rastung einstellbar sind.

Vorteilhaft kann der erfindungsgemäße überwindbare Anschlag so ausgebildet werden, daß er auch als Festanschlag einsetzbar ist. Hierzu können Mittel eingesetzt werden, mit denen in sehr einfacher und kostengünstiger Weise eine Blockierung des Auslenkungsweges der Anschlagmittel erreicht wird.
Vorzugsweise können aus Kunststoff hergestellte Plättchen als starre Elemente in die Freiräume für die federnde Auslenkung der Anschlagmittel eingesetzt werden. Zweckmäßig werden die Plättchen hierbei mit Rastnasen versehen, so daß sie sicher in der Stecklage im jeweiligen Freiraum fixierbar sind.

Ausführungsbeispiele der Erfindung sind in der Zeichnung dargestellt und werden im folgenden näher erläutert. Es zeigt
- Figur 1: ein zum Teil dargestelltes Einhebelmischventil in Absperrstellung, teilweise geschnitten;
- Figur 1a: einen Teil des in Figur 1 dargestellten Einhebelmischventils in vergrößerter Darstellung;
- Figur 2: das in Figur 1 gezeigte Einhebelmischventil um 90° gedreht, teilweise geschnitten;
- Figur 3: einen Teil des in Figur 1 dargestellten Einhebelmischventils in Draufsicht;
- Figur 4: einen Teil des in Figur 1 gezeigten Einhebelmischventils mit einer ersten Ausführung eines einen überwindbaren Widerstand erzeugenden Anschlagmittels;
- Figur 5: die in Figur 4 gezeigte Anschlagausbildung, wobei die Anschlagausbildung an einem flachen, scheibenförmigen Rahmenelement ausgebildet ist, welches an einem Drehring oder an der Mischventilkartusche befestigbar ist;
- Figur 6 bis 12: weitere Ausführungsbeispiele für einen oder mehrere überwindbare Widerstände erzeugende Anschlagmittel;
- Figur 13: ein anderes Einhebelmischventil in halbgeöffneter Stellung, teilweise geschnitten;
- Figur 14: Teile des in Figur 13 gezeigten Einhebelmischventils in auseinandergezogener Form in perspektivischer Darstellung;
- Figur 15: die in Figur 13 gezeigte Hülse in vergrößerter Darstellung in Seitenansicht;
- Figur 16: die in Figur 15 gezeigte Hülse in Druntersicht;
- Figur 17: die in Figur 15 gezeigte Hülse in Draufsicht;
- Figur 18: die in Figur 15 gezeigte Hülse um 90° gedreht in Seitenansicht.
- Figur 19: ein weiteres zum Teil dargestelltes Einhebelmischventil, teilweise geschnitten;
- Figur 20: das in Figur 19 dargestellte Einhebelmischventil in der Schnittebene IV.

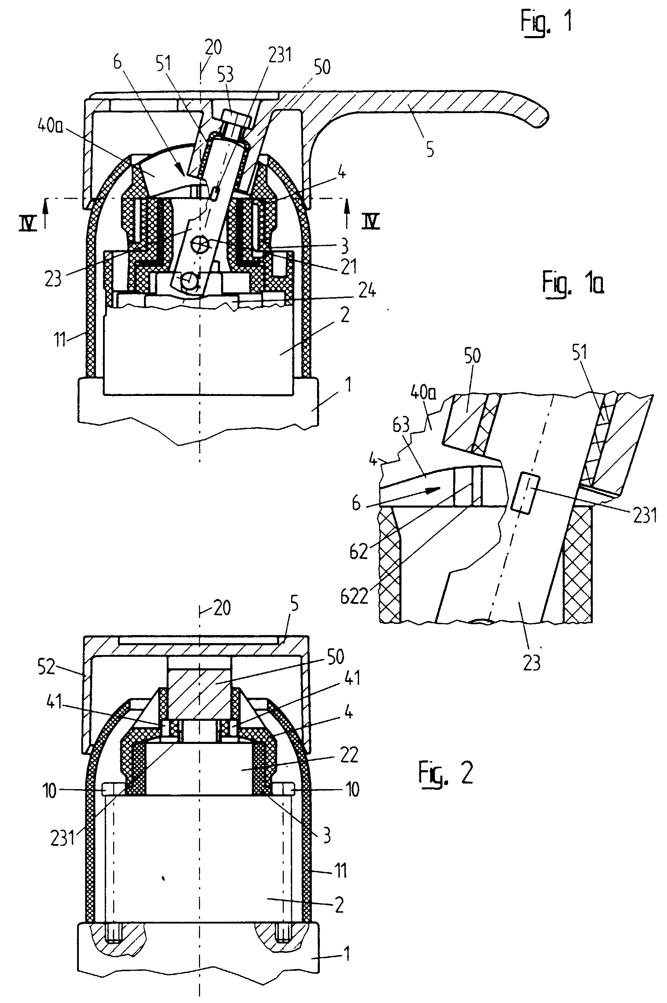

Der Einfachheit halber sind bei den Ausführungsbeispielen in der Zeichnung gleiche oder entsprechende Elemente mit jeweils gleichen Bezugszeichen versehen.
Das in der Zeichnung in den Figuren 1 bis 4 dargestellte Einhebelmischventil wird im wesentlichen von einem zum Teil dargestellten Armaturenkörper 1, einem die Ventilelemente gekapselt haltenden Mischventilkartuschengehäuse 2, einem Anschlagring 3, einem Drehring 4, einem Handgriff 5 und einem mindestens einen überwindbaren Widerstand erzeugenden Anschlagmittel 6 gebildet. Das Mischventilkartuschengehäuse 2 ist mit Spannschrauben 10 mit dem Armaturenkörper 1 in bekannter Weise gedichtet verbunden, wobei die Zuläufe von Kalt- und Warmwasser und der Auslaß von Mischwasser stirnseitig zwischen Armaturenkörper 1 und Mischventilkartuschengehäuse 2 - in der Zeichnung nicht dargestellt - erfolgt. Das Mischventilkartuschengehäuse 2 ist koaxial zu einer Mittelachse 20 angeordnet und weist am vorstehenden Stirnbereich einen Ansatz 22 auf. Auf diesem Ansatz 22 kann der Anschlagring 3 in verschiedenen Drehstellungen drehfest aufgesteckt werden. Auf dem Anschlagring 3 ist der Drehring 4 durch Anschläge begrenzt drehbar angeordnet.

Aus der Stirnseite des Ansatzes 22 ist ein Stellhebel 23 herausgeführt. Im Innern des Mischventilkartuschengehäuses 2 ist der Stellhebel 23 mit einem in zwei Freiheitsgraden bewegbaren Ventilglied 24 verbunden, wobei der Stellhebel 23 im ersten Freiheitsgrad um die Mittelachse 20 drehbar und im zweiten Freiheitsgrad um eine senkrecht zur Mittelachse 20 angeordnete Achse 21 verschwenkbar ist. Auf dem vorstehenden Endbereich des Stellhebels 23 ist unter Zwischenlage einer Isolierbuchse 51 der Handgriff 5 mit einer Befestigungsschraube 53 in der Stecklage gesichert angeordnet. Die Isolierbuchse 51 mit dem Endbereich des Stellhebels 23 ist hierbei von einem einstückig an dem Handgriff 5 ausgebildeten Befestigungshals 50 aufgenommen. Zur Verkleidung des Mischventilkartuschengehäuses 2 ist außerdem eine Abdeckhülse 11 vorgesehen, die im vorstehenden Bereich kugelförmig ausgebildet ist, um einen harmonischen Übergang mit einem als Schürze 52 ausgebildeten zylindrischen Ansatz des Handgriffs 5 zu erzeugen.
In der Stecklage greift der Befestigungshals 50, dessen Querschnitt etwa quadratisch ausgebildet ist, in einen erweiterten Bereich 40a der Schwenkbahn 40 des Drehrings 4 ein. Mit dieser Ausbildung wird erreicht, daß der Stellhebel 23 mit dem Handgriff 5 einerseits bei einer Drehbewegung um die Mittelachse 20 den Drehring 4 entsprechend mitdreht, während andererseits eine Schwenkbewegung um die Achse 21 über einen bestimmten Schwenkwinkel ermöglicht ist. Der Anschlagring 3 kann in verschiedenen Drehstellungen auf den Ansatz 22 des Mischventilkartuschengehäuses 2 drehfest aufgesteckt werden, so daß hiermit der Drehwinkel bzw. die maximal mögliche Mischwassertemperatureinstellung in Abhängigkeit von der Drehstellung des Anschlagrings 3 begrenzt werden kann. Eine derartige Ausbildung ist aus der deutschen Offenlegungsschrift DE 36 07 349 A1 bekannt.

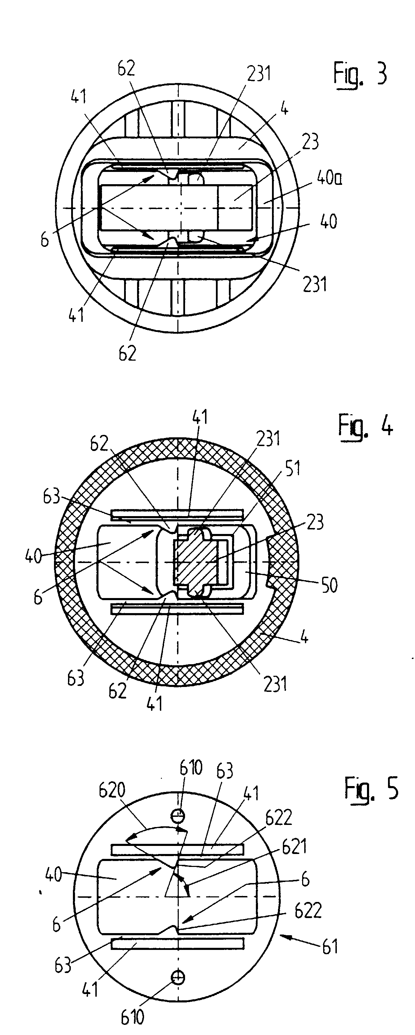

Am Drehring 4 sind außerdem parallel zur Schwenkbahn 40 im Bereich des Stellhebelaustritts aus dem Mischventilkartuschengehäuse 2 einen überwindbaren Widerstand erzeugende Anschlagmittel 6 vorgesehen. Wie es insbesondere aus Figur 4 der Zeichnung zu entnehmen ist, sind im Bodenbereich des Drehrings 4 zu beiden Seiten der Schwenkbahn 40 an Federbalken 63 ausgebildete Vorsprünge 62 vorgesehen. Die Federbalken 63 mit ihrem Vorsprung 62 können radial federnd in einen Freiraum 41 ausgelenkt werden, wobei die Federbalken 63 mit den Vorsprüngen 62 einstückig mit dem Drehring 4 im Spritzgußverfahren hergestellt sind. An den beiden Seitenwandungen des Stellhebels 23 sind Knaggen 231 angeformt und so dimensioniert, daß bei einem Schwenkvorgang die Vorsprünge 62 federelastisch seitlich ausgelenkt werden, so daß im Anschlagbereich der Vorsprünge 62 mit den Knaggen 231 ein überwindbarer Widerstand bei der Betätigung zur Mengenregulierung des Mischventils auftritt.
Neben der mit dem Drehring 4 einstückigen Ausbildung der Anschlagmittel können diese auch separat an einem flachen, scheibenförmigen Rahmenelement 61 ausgebildet sein, wie es in Figur 5 der Zeichnung dargestellt ist. Das Rahmenelement 61 kann dabei in eine Bohrung des Drehrings 4 eingelegt werden oder aber auch auf einer aus dem Mischventilkartuschengehäuse 2 vorstehenden Stirnfläche eines mit dem Ventilglied 24 gekoppelten Drehglieds, beispielsweise mit Hilfe der Befestigungsbohrungen 610, gehaltert werden. Das Rahmenelement 61 kann aus geeignetem Werkstoff, wie z.B. Kunststoff oder Metall, hergestellt werden. Die Vorsprünge 62 sind bei den Ausführungsbeispielen gemäß Figur 5 und 4 gleich ausgebildet und weisen im Querschnitt etwa Dreieckform auf, dessen vorstehende Spitze einen Winkel 620 von 90° aufweist. Die beim öffnungsvorgang mit den Knaggen 231 in Anschlagberührung gelangende Fläche 622 der Vorsprünge 62 weist dabei einen Winkel 621 von etwa 60° zur Schwenkbahn 40 auf.
Die Knaggen 231 sind vorzugsweise einstückig mit dem Stellhebel 23 ausgebildet. Hierzu kann auch der Stellhebel 23 aus Kunststoff, vorzugsweise aus glasfaserverstärktem Kunststoff, hergestellt sein. Da das Rahmenelement 61 bzw. der Drehring 4 von außen leicht zugänglich und ausgewechselt werden können, sollten möglichst die Knaggen 231 aus verschleißfestem Werkstoff hergestellt werden, so daß ein Verschleiß im wesentlichen lediglich an den Vorsprüngen 62 auftreten kann. Bei einem Verschleiß der Vorsprünge 62 können diese einfach durch Austausch eines Rahmenelements 61 oder eines Drehrings 4 ersetzt werden.

Die vorstehend beschriebene Betätigungseinrichtung hat folgende Funktionsweise:
Das Eingriffmischventil wird von der Absperrstellung, wie sie in Figur 1 gezeigt ist, durch eine Aufwärtsschwenkbewegung des Handgriffs 5 in eine Offenstellung bewegt. Hierbei gelangen die beiden paarweise vorgesehenen Knaggen 231 bei einer halbgeöffneten Ventilstellung mit ihren senkrecht zur Schwenkbahn 40 angeordneten Seitenflächen jeweils an eine Fläche 622 der Vorsprünge 62 zur Anlage, so daß der Benutzer einen Widerstand verspürt. Mit einer Krafterhöhung am Handgriff 5 können die Vorsprünge 62 an den Federbalken 63 seitlich ausgelenkt werden, so daß die Verrastung überwunden wird und mit dem Handgriff 5 der Stellhebel 23 bis in die vollgeöffnete Ventilposition verschwenkt werden kann. Die Vorsprünge 62 federn danach in ihre ursprüngliche Position zurück. Beim Schließvorgang des Ventils bzw. beim Zurückschwenken des Stellhebels 23 gelangen die einen geringeren Anstieg - etwa 30° zur Schwenkachse - aufweisende rückseitige Fläche der Vorsprünge 62 mit rückseitigen, verrundeten Kante der Knaggen 231 in Berührung, so daß eine wesentlich leichtgängigere Auslenkung der Anschlagmittel 6 beim Schließvorgang ermöglicht wird.

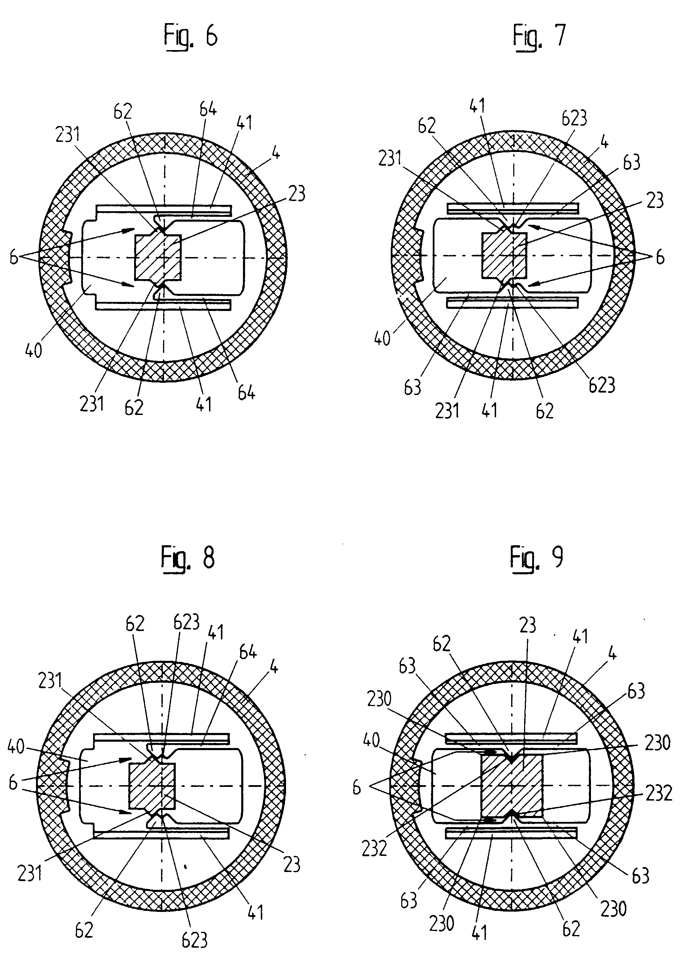

Das in Figur 6 der Zeichnung gezeigte Ausführungsbeispiel unterscheidet sich zu dem vorgehenden im wesentlichen dadurch, daß der Vorsprung 62 jeweils an einem Federbein 64 ausgebildet ist. Die Knaggen 231 sind hierbei im Querschnitt dreieckig ausgebildet und haben an der vorstehenden Spitze einen Winkel von 90°. Die Vorsprünge 62 weisen dabei in gleicher Weise im Querschnitt jeweils ein gleichschenkliges Dreieck auf, welches an der Spitze auch einen Winkel von 90° hat. Hierdurch gelangen die Seitenflächen der Knaggen 231 parallel zu den Seitenflächen der Vorsprünge 2 zur Anlage und eine relativ leichte, verschleißarme, seitliche Auslenkung der Anschlagmittel 6 wird ermöglicht.

Das Ausführungsbeispiel gemäß Figur 7 unterscheidet sich zu dem vorhergehenden Ausführungsbeispiel dadurch, daß an den Vorsprüngen 62 eine prismatische oder rinnenförmige Ausnehmung ausgebildet ist, die eine zusätzliche Verrastung mit jeweils einer Knagge 231 ermöglicht. Hierbei sind die beiden Vorsprünge 62 an Federbalken 63 ausgebildet. In Figur 8 ist dagegen anstatt des Federbalkens 63 jeweils ein Federbein 64 vorgesehen. Im übrigen entspricht Figur 8 dem Ausführungsbeispiel gemäß Figur 6.

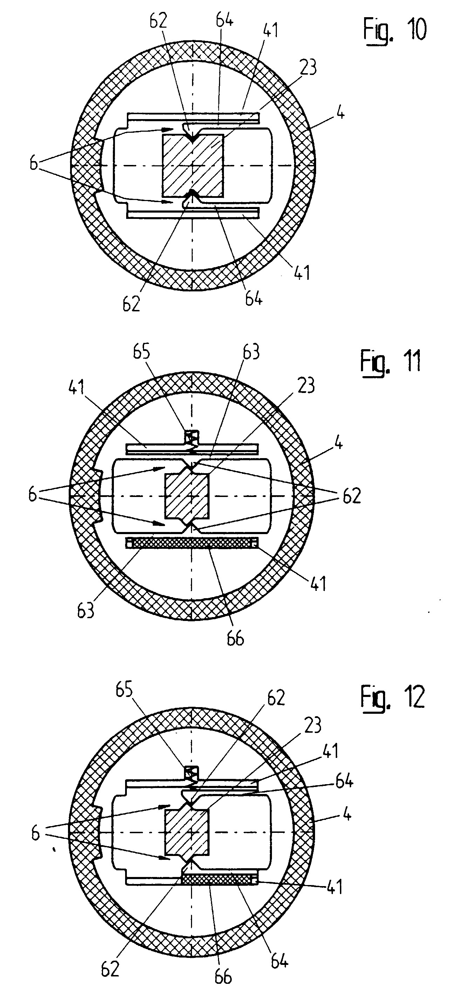

Bei dem in Figur 9 dargestellten Ausführungsbeispiel sind die Vorsprünge 62 entsprechend dem Ausführungsbeispiel Figur 6 ausgebildet, jedoch an jeweils einem Federbalken 63 angeordnet. An dem Stellhebel 23 sind paarweise zu beiden Seiten jeweils eine Nut 232 ausgebildet, deren Querschnitt einen entsprechend dem Vorsprung 62 im Querschnitt als gleichschenkliges Dreieck ausgebildet ist. Beim Verschwenkvorgang von der Absperrstellung aus gesehen, gelangt zunächst eine Kante 230 an jeweils einem Vorsprung 62 zur Anlage, so daß der Benutzer einen ersten Rastpunkt bei der Betätigung verspürt. Wird hierbei durch eine Krafterhöhung eine Weiterverschwenkung vorgenommen, so gelangen danach die Vorsprünge 62 in die zugehörigen Nuten 232, wie es in Figur 9 dargestellt ist, so daß der Benutzer in der halbgeöffneten Stellung einen zweiten Rastpunkt verspürt. Wird hiernach der Handgriff 5 weiter in Offenstellung bewegt, so werden wiederum die Vorsprünge 62 seitlich ausgelenkt und gelangen nach dem Vorbeiführen des Stellhebels 23 wieder in ihre ursprüngliche Position federnd zurück. Beim Schließvorgang erfolgt die seitliche Bewegung der Anschlagmittel 6 in umgekehrter Reihenfolge.
Bei dem Ausführungsbeispiel gemäß Figur 10 sind anstatt Federbalken 63 Federbeine 64 ausgebildet. Im übrigen entspricht diese Ausbildung der in Figur 9 gezeigten.

Bei den in Figur 11 und 12 gezeigten Ausführungsbeispielen sind bei den Federbalken 63 oder Federbeinen 64 zusätzlich zur Verstärkung der Federkraft eine als Schraubenwendel ausgebildete Feder 65 oder als Elastomer ausgebildete Feder 66 in dem Freiraum 41 angeordnet. Lediglich zur vereinfachten Darstellung sind hierbei in den beiden Ausführungsbeispielen einerseits eine Ausführung der Feder 66 und andererseits eine Ausführung der Feder 65 gezeigt. Im übrigen entsprechen diese beiden Ausführungsbeispiele den vorstehend beschriebenen Ausführungen.

Bei den beschriebenen Ausführungsbeispielen kann mit den wenigstens einen überwindbaren Widerstand erzeugenden Anschlagmitteln 6 ein Wasserspareffekt erreicht werden bzw. ein "Ökobereich" beim Einstellen durch den Rastvorgang für den Benutzer sicher markiert werden. Die Knaggen 231 oder Nuten 232 mit den Vorsprüngen 62 können dabei so plaziert werden, daß die Verrastung beispielsweise bei einem Öffnungsgrad von 50% oder beispielsweise 33 und 66% wirksam wird. Der überwindbare Widerstand der Anschlagmittel 6 kann durch Variation der Geometrie der Federbalken 63 bzw. der Federbeine 64 und der Knaggen 231 bzw. Nuten 232 und/ oder der zusätzlichen Federn 65,66 in weiten Bereichen bestimmt werden. Die vorstehende Spitze des Vorsprungs 62 kann hierbei vorzugsweise einen Winkel 620 von 45 bis 135° aufweisen. Die wirksame Fläche 622 kann zweckmäßig einen Winkel 621 von 30 bis 90° haben.

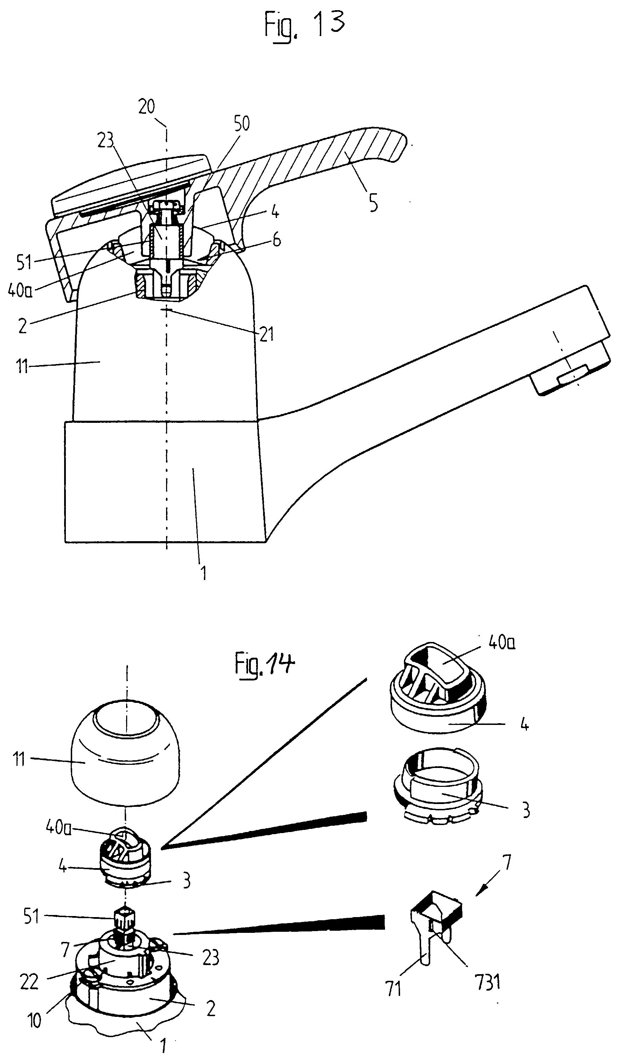

Bei dem in Figur 13 und 14 gezeigten Einhebelmischventil ist an einem Armaturenkörper 1 ein Mischventilkartuschengehäuse 2 mit Spannschrauben 10 befestigt. Zur Abdeckung des Mischventilkartuschengehäuses 2 ist außerdem eine Abdeckhülse 11 auf dem Armaturenkörper 1 angeordnet. Aus dem vorstehenden Endbereich des Mischventilkartuschengehäuses 2 ist ein Stellhebel 23 herausgeführt, auf dem ein Handgriff 5 mit einem Befestigungshals 50 befestigt ist. Um einen Wärmeübertritt von dem Stellhebel 23 auf den Handgriff 5 zu unterbinden, ist zwischen dem Stellhebel 23 und dem Befestigungshals 50 eine Isolierbuchse 51 angeordnet. Der Handgriff 5 greift hierbei in seiner Befestigungslage mit dem Befestigungshals 50 in einen erweiterten Bereich 40a einer Schwenkbahn eines Drehrings 4 ein, der auf einem in verschiedenen Drehstellungen auf einen Ansatz 22 des Mischventilkartuschengehäuses 2 aufsteckbaren Anschlagring 3 gelagert ist.

Mit dem Handgriff 5 kann durch Auf- und Abbewegen um eine Achse 21 die Gesamtdurchflußmenge eingestellt werden, während mit einem Verschwenken um eine Mittelachse 20 das Mischungsverhältnis von Kalt- und Warmwasser bestimmt werden kann. Beim Öffnungsvorgang sind im Bereich der Schwenkbahn ein oder mehrere, einen überwindbaren Widerstand erzeugende Anschlagmittel 6 vorgesehen, welche federnd seitlich in die Schwenkbahn des Schwenkhebels 23 hineinragen und mit am Stellhebel 23 angeordneten Knaggen 731 zusammenwirken.

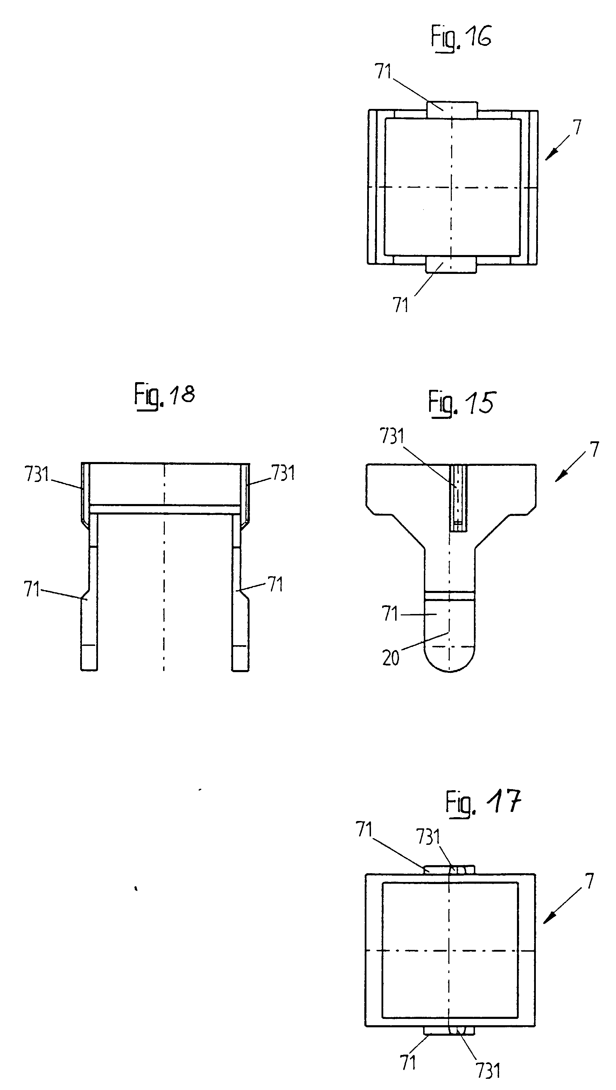

Die Knaggen 731 sind an einer Hülse 7, wie es insbesondere aus Figur 15 bis 18 der Zeichnung entnehmbar ist, einstückig ausgebildet. Die Hülse 7 kann hierbei nach dem Entfernen des Handgriffs 5 und der Isolierbuchse 51 von außen auf den Stellhebel 23 aufgeschoben werden. Die Axialposition der Hülse 7 auf dem Stellhebel 23 wird von zwei parallel zur Mittelachse angeordneten Stegen 71 bestimmt, die mit ihrer Stirnseite im Bereich der Achse 21 in dem Mischventilkartuschengehäuse 2 anliegen. In entgegengesetzter Richtung wird die Hülse 7 von dem wieder aufgesetzten Handgriff 5 axial gesichert. Der Stellhebel 23 hat dabei vorzugsweise einen quadratischen Querschnitt, so daß die Hülse drehfest auf dem Stellhebel 23 anordbar ist.
Die Knaggen 731 sind auf zwei gegenüberliegenden Seiten außermittig neben der Mittellinie 20 angeordnet, wie es insbesondere aus Figur 15 zu entnehmen ist. Mit dieser außermittigen Anordnung wird erreicht, daß durch ein Umstecken der Hülse 7, mit einer Drehung um 180°, zwei unterschiedliche Schwenkwinkel für den Anschlag an das Anschlagmittel 6 erreichbar sind.
Mit der vorstehend beschriebenen Hülsenausbildung kann somit durch Einsetzen oder Fortlassen der Hülse 7 auf Wunsch das einen überwindbaren Widerstand erzeugende Anschlagmittel 6 zur Wirkung gebracht werden, wobei mit der wahlweise in einer um 180° unterschiedlichen Drehstellung auf den Stellhebel 23 aufsteckbaren Hülse 7 zwei unterschiedliche Schwenkwinkelbereiche bis zum Anschlag an das Anschlagmittel 6 einstellbar sind.

Bei dem vorstehend beschriebenen Ausführungsbeispiel ist die Hülse 7 als separates Bauteil ausgebildet. Selbstverständlich kann aber auch die Hülse 7 einstükkig mit der Isolierbuchse 51 ausgebildet werden, wobei dann die Stege 71 entfallen können, da die Isolierbuchse 51 axial durch die Griffbefestigung gesichert ist.
Alternativ kann auch die Hülse 7 an der einen Seite geschlitzt ausgebildet werden, so daß ein radiales Aufschieben und Einschnappen auf den Stellhebel 23 ermöglicht ist.

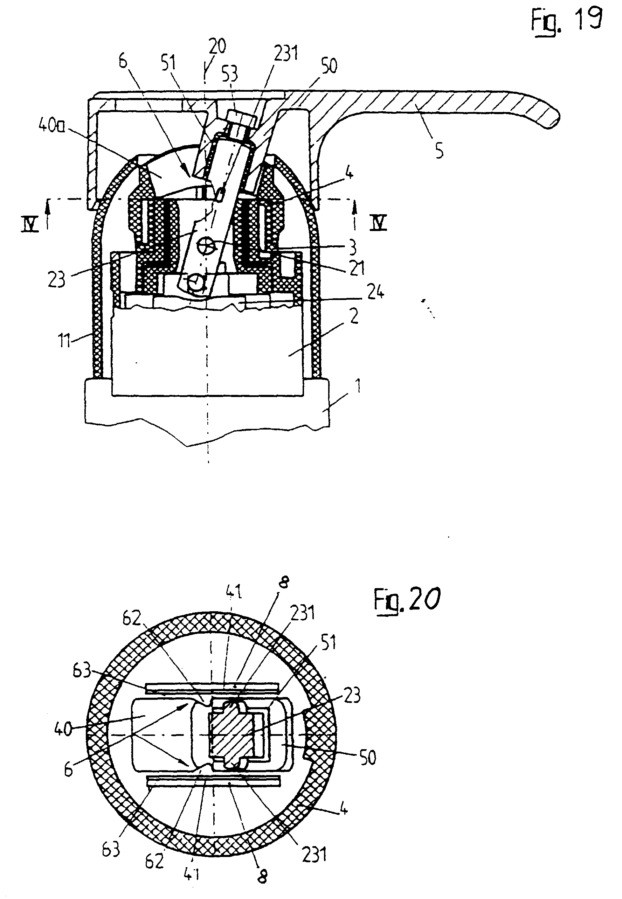

Bei dem in der Zeichnung Figur 19 und 20 dargestellten Einhebelmischventil ist an einem zum Teil dargestellten Armaturenkörper 1 ein Mischventilkartuschengehäuse 2 mit in der Zeichnung nicht dargestellten Spannschrauben festverbunden. Zur Abdeckung des Mischventilkartuschengehäuses 2 ist außerdem eine Abdeckhülse 11 auf dem Armaturenkörper 1 angeordnet.
An dem stirnseitigen Endbereich des Mischventilkartuschengehäuses 2 ist ein Stellhebel 23 herausgeführt und trägt an seinem äußeren Ende einen Handgriff 5. Der Handgriff 5 umfaßt mit einem Befestigungshals 50, unter Zwischenlage einer Isolierbuchse 51, den Endbereich des Stellhebels 23 und ist axial mit Hilfe einer Befestigungsschraube 53 gesichert. Auf einem vorstehenden Ansatz des Mischventilkartuschengehäuses 2 ist ein Anschlagring 3 und ein Drehring 4 angeordnet, wobei in dem Drehring 4 in einen erweiterten Bereich 40a einer bogenförmigen Schwenkbahn der Befestigungshals 50 einfaßt und somit drehfest mit dem Drehring 4 gekoppelt ist. Im Grund des erweiterten Bereichs 40a sind zu beiden Seiten der Schwenkbahn Anschlagmittel 6 ausgebildet, wobei jeweils ein Vorsprung 62 in die Schwenkbahn hineinragt und mit einer an dem Stellhebel 63 ausgebildeten Knagge 231 zusammenwirkt, wie es insbesondere aus Figur 2 zu entnehmen ist. Der Vorsprung 62 ist jeweils an einem Federbalken 63 ausgebildet, der jeweils zur Außenseite hin einen Freiraum 41 aufweist.
Durch eine Drehbewegung des Handgriffs 5 um eine Mittelachse 20 wird mit dem Stellhebel 23 ein Ventilglied 24 verdreht, wodurch das Mischungsverhältnis des zufließenden Kalt- und Warmwassers einstellbar ist. Durch ein Auf- und Abbewegen des Handgriffs 5 um eine horizontale Achse 21 wird das Ventilglied 24 zur Gesamtdurchflußmengeneinstellung radial bewegt.

Bei einem Schwenkvorgang um die horizontale Achse 21 bei der Öffnungsbewegung gelangt der Stellhebel 23 mit seinen seitlich angeordneten Knaggen 231 an den Vorsprüngen 62 zur Anlage und drückt diese radial federnd zur Seite, so daß das Anschlagmittel 6 einen Rastpunkt bzw. einen überwindbaren Widerstand bildet. Zur Verhinderung der seitlichen Auslenkung der Vorsprünge 62 kann wahlweise ein Plättchen 8, wie es insbesondere aus Figur 20 zu entnehmen ist, in den jeweiligen Freiraum 41 eingeklipst werden, so daß im Anschlagbereich die Vorsprünge 62 mit den Knaggen 231 einen nichtüberwindbaren Widerstand bildet und das Mischventil nur begrenzt bis zu diesem Anschlag zu öffnen ist.
Die Plättchen 8 können vorzugsweise im Spritzgießverfahren aus geeignetem Kunststoff hergestellt werden, wobei zur sicheren Stecklage in den Freiräumen 41 an den Plättchen 8 Rastnasen mitangespritzt sein können (in der Zeichnung nicht dargestellt).

## Patentansprüche

1. Betätigungsvorrichtung für ein Einhebelmischventil, insbesondere für Wasserleitungen im Sanitärbereich, mit einem in zwei Freiheitsgraden bewegbaren Ventilglied (24) zur Bestimmung des Mischungsverhältnisses und der Gesamtdurchflußmenge, wobei Anschlagmittel zur Bewegungsbegrenzung des Ventilglieds (24) vorgesehen sind, bei denen wenigstens eine Begrenzung von einem einen überwindbaren Widerstand erzeugenden Anschlagmittel (6) erfolgt, und zur Ventilbetätigung ein mit dem Ventilglied (24) verbundener, aus einem die Ventilelemente enthaltendes Mischventilkartuschengehäuse (2) herausgeführter, koaxial zur Mittelachse (20) drehbarer und zu einer quer zur Mittelachse (20) liegenden Achse (21) verschwenkbarer, im Querschnitt im wesentlichen quadratisch oder rechteckig ausgebildeter Stellhebel (23) vorgesehen ist, dadurch gekennzeichnet, daß der Stellhebel (23) im Austrittsbereich aus dem Mischventilkartuschengehäuse (2) wenigstens eine, seitlich aus einer Schwenkbahn (40) des Stellhebels (23) vorstehende Knagge (231) oder wenigstens eine, seitlich in dieser Schwenkbahn einspringende Nut (232) aufweist, die mit einem oder mehreren, den überwindbaren Widerstand erzeugenden, außerhalb des Mischventilkartuschengehäuses (2) angeordneten Anschlagmittel (6) zusammenwirkt, wobei die Anschlagmittel (6) federnd seitlich in die Schwenkbahn (40) wenigstens einer Knagge (231) oder einer Nut (232) am Stellhebel (23) hineinragen.

2. Betätigungsvorrichtung nach Anspruch 1, dadurch gekennzeichnet, daß die einen Widerstand erzeugenden Anschlagmittel (6) zu beiden Seiten der Schwenkbahn (40) paarweise, vorzugsweise am Drehing (4), angeordnet sind.

3. Betätigungsvorrichtung nach Anspruch 1 oder 2, dadurch gekennzeichnet, daß am Stellhebel (23) ein oder mehrere Knaggen (231) seitlich angeformt sind, welche in einer oder mehreren bestimmten Schwenkstellungen an den einen überwindbaren Widerstand erzeugenden Anschlagmitteln (6) anliegen.

4. Betätigungsvorrichtung nach einem der Ansprüche 1 bis 3, dadurch gekennzeichnet, daß die einen überwindbaren Widerstand erzeugenden Anschlagmittel (6) jeweils wenigstens einen federnden Vorsprung (62) aufweisen.

5. Betätigungsvorrichtung nach Anspruch 4, dadurch gekennzeichnet, daß der Vorsprung (62) mit einer oder mehreren der in den Seitenflächen des Stellhebels (23) ausgebildeten Nuten (232) in Eingriff bringbar ist.

6. Betätigungsvorrichtung nach Anspruch 4 oder 5, dadurch gekennzeichnet, daß der Vorsprung im Querschnitt dreieckig ausgebildet ist, dessen Spitze einen Winkel (620) von 45 bis 135°, vorzugsweise 90°, aufweist.

7. Betätigungsvorrichtung nach Anspruch 6, dadurch gekennzeichnet, daß die beim Öffnungsvorgang zur Anlage gelangende Fläche (622) des Anschlagmittels (6) einen Winkel (621) von 30 bis 90°, vorzugsweise 60°, zur Schwenkbahn (40) aufweist.

8. Betätigungsvorrichtung nach wenigstens einem der Ansprüche 1 bis 7, dadurch gekennzeichnet, daß an dem Stellhebel (23) seitlich ein oder mehrere Knaggen (231) angeformt sind, die mit einem oder mehreren Vorsprüngen (62) der einen überwindbaren Widerstand erzeugenden Anschlagmitteln (6) in Eingriff stehen, derart, daß an einer oder mehreren Schwenkstellen des Stellhebels (23) eine kurze, eine bestimmte Schwergängigkeit aufweisende Schwenkstrecke entsteht.

9. Betätigungsvorrichtung nach einem der Ansprüche 1 bis 8, dadurch gekennzeichnet, daß die Anschlagmittel (6) an einem flachen Rahmenelement (61) angeordnet sind, welches die Schwenkbahn (40) des Stellhebels (23) umschließt, wobei das Rahmenelement (61) synchron drehbar mit dem Ventilglied (24) auf dem Ventilkartuschengehäuse (2) befestigbar ist.

10. Betätigungsvorrichtung nach einem der Ansprüche 1 bis 9, dadurch gekennzeichnet, daß die Anschlagmittel (6) jeweils an einem an beiden Endbereichen gehaltenen Federbalken (63) angeordnet sind.

11. Betätigungsvorrichtung nach einem der Ansprüche 1 bis 9, dadurch gekennzeichnet, daß die Anschlagmittel (6) jeweils am Endbereich eines Federbeins (64) vorgesehen sind.

12. Betätigungsvorrichtung nach einem der Ansprüche 9 bis 11, dadurch gekennzeichnet, daß das Rahmenelement (61) mit den Anschlagmitteln (6) einstückig aus Kunststoff hergestellt ist.

13. Betätigungsvorrichtung nach wenigstens einem der Ansprüche 1 bis 12, dadurch gekennzeichnet, daß der Stellhebel (23) mit den Knaggen (231) oder Nuten (232) einstückig aus Kunststoff, vorzugsweise glasfaserverstärktem Kunststoff, hergestellt ist.

14. Betätigungsvorrichtung nach wenigstens einem der Ansprüche 1 bis 13, dadurch gekennzeichnet, daß ein in verschiedenen Drehstellungen zur Drehbegrenzung des Stellhebels (23) auf das Mischventilkartuschengehäuse (2) steckbarer Anschlagring (3) und ein auf dem Anschlagring (3) angeordneter Drehring (4), in dem ein diagonalschlitzartiger Durchbruch als Schwenkbahn (40) und drehfeste Kupplung des Stellhebels (23) ausgebildet ist, vorgesehen sind, wobei die einen überwindbaren Widerstand erzeugenden Anschlagmittel (6) in dem Drehring (4) angeordnet sind.

15. Betätigungsvorrichtung nach Anspruch 14, dadurch gekennzeichnet, daß die Anschlagmittel (6) im Grund eines die Schwenkbahn für einen Befestigungshals (50) eines auf dem Stellhebel (23) angeordneten Handgriffs (5) bildenden erweiterten Bereichs (40a) angeordnet sind, wobei die Drehkupplung des Stellhebels (23) mit dem Drehring (4) über den Befestigungshals (50) erfolgt.

16. Betätigungsvorrichtung nach Anspruch 14 oder 15, dadurch gekennzeichnet, daß die Anschlagmittel (6) einstückig mit dem Drehring aus Kunststoff hergestellt sind.

17. Betätigungsvorrichtung nach wenigstens einem der Ansprüche 1 bis 16, dadurch gekennzeichnet, daß eine auf den Stellhebel (23) aufsteckbare Hülse (7) vorgesehen ist, an der ein oder mehrere Knaggen (731) angeordnet sind, die an das einen überwindbaren Widerstand erzeugende Anschlagmittel (6) zur Anlage gelangen.

18. Betätigungsvorrichtung nach Anspruch 17, dadurch gekennzeichnet, daß die Hülse (7) mit wenigstens einem Steg (71), vorzugsweise mit zwei parallel angeordneten Stegen (71), versehen ist, der (bzw. die) die Hülse (7) in der einen Richtung axial im Bereich derAchse (21), um die der Stellhebel (23) verschwenkbar ist, abstützt(en), wobei die Hülse (7) in der anderen axialen Richtung von einem auf dem Stellhebel (23) angeordneten Handgriff (5) gehalten ist.

19. Betätigungsvorrichtung nach Anspruch 17, dadurch gekennzeichnet, daß an der Hülse eine Isolierbuchse einstückig angeformt ist, mit der ein auf dem Stellhebel (23) angeordneter Handgriff (5) thermisch zum Stellhebel (23) isoliert ist, wobei die Isolierbuchse axial von dem auf dem Stellhebel (23) befestigten Handgriff (5) gesichert ist.

20. Betätigungsvorrichtung nach einem der Ansprüche 17 bis 19, dadurch gekennzeichnet, daß die Hülse (7) an einer Seite, an der keine Knaggen (731) vorgesehen sind, geschlitzt ausgebildet ist, so daß die Hülse (7) radial auf den Stellhebel (23) aufgeschnappt werden kann.

21. Betätigungsvorrichtung nach einem der Ansprüche 17 bis 20, dadurch gekennzeichnet, daß der Stellhebel (23) im Querschnitt quadratisch oder rechteckig ausgebildet ist und die Knaggen (731) an der Hülse (7) zur Mittelachse (20) versetzt vorgesehen sind, so daß durch ein Umstecken der Hülse (7) mit einer Drehung um 180° zwei unterschiedliche Schwenkwinkel für den Anschlag an das Anschlagmittel (6) erzielbar sind.

22. Betätigungsvorrichtung nach einem der Ansprüche 17 bis 21, dadurch gekennzeichnet, daß die Hülse (7) mit den Knaggen (731) einstückig aus Kunststoff im Spritzgießverfahren hergestellt ist.

23. Betätigungsvorrichtung nach wenigstens einem der Ansprüche 1 bis 22, dadurch gekennzeichnet, daß Mittel vorgesehen sind, mit denen die federnde Auslenkung des Anschlagmittels (6) unterbindbar ist, so daß wahlweise das Anschlagmittel (6) als Festanschlag benutzbar ist.

24. Betätigungsvorrichtung nach Anspruch 23, dadurch gekennzeichnet, daß als Mittel zur Unterbindung der Auslenkung der Anschlagmittel (6) jeweils ein Plättchen (8) in einem Freiraum (41) für die Blokkierung der Auslenkung angeordnet ist.

25. Betätigungsvorrichtung nach Anspruch 24, dadurch gekennzeichnet, daß die Plättchen (8) aus Kunststoff im Spritzgießverfahren hergestellt sind, wobei vorzugsweise an den Plättchen (8) Rastnasen angeformt sind, die jeweils das Plättchen (8) in dem Freiraum (41) in der Stecklage sichern.

## Claims

1. Actuating device for a single lever mixing valve, especially for water pipes in the sanitary field, having a valve member (24), movable with two degrees of freedom, to determine the mixing ratio and the total flow, stop means being provided to limit the movement of the valve member (24), wherein at least one limitation is effected by a stop means (6) producing a resistance that can be overcome, and for valve actuation an adjusting lever (23) is provided which is connected to the valve member (24), is led out of a mixing valve cartridge housing (2) containing the valve elements, is rotatable coaxially with the central axis (20) and pivotable with respect to an axis (21) transverse to the central axis (20), and is substantially square or rectangular in cross-section, characterized in that the adjusting lever (23), in the region where it emerges from the mixing valve cartridge housing (2), has at least one protuberance (231), projecting laterally out of a pivot path (40) of the adjusting lever (23), or at least one groove (232) protruding laterally in this pivot path, which co-operates with one or more stop means (6) which produce the resistance that can be overcome and are arranged outside the mixing valve cartridge housing (2), the stop means (6) projecting resiliently sideways into the pivot path (40) of at least one protuberance (231) or of a groove (232) on the adjusting lever (23).

2. Actuating device according to Claim 1, characterized in that the stop means (6) producing a resistance are arranged on both sides of the pivot path (40) in pairs, preferably on the rotary ring (4).

3. Actuating device according to Claim 1 or 2, characterized in that on the adjusting lever (23) a plurality of protuberances (231) are arranged which in one or more defined pivot position(s) bear against the stop means (6) producing a resistance that can be overcome.

4. Actuating device according to one of Claims 1 to 3, characterized in that the stop means (6) producing a resistance that can be overcome each have at least one resilient projection (62).

5. Actuating device according to Claim 4, characterized in that the projection (62) is arranged to be brought into engagement with one or more of the grooves (232) formed in the lateral surfaces of the adjusting lever (23).

6. Actuating device according to Claim 4 or 5, characterized in that the projection (62) is triangular in cross-section, its apex having an angle (620) of 45 to 135°, preferably 90°.

7. Actuating device according to Claim 6, characterized in that the surface (622), coming to bear during the opening operation, of the stop means (6) is at an angle (621) of 30 to 90°, preferably 60°, to the pivot path (40).

8. Actuating device according to at least one of Claims 1 to 7, characterized in that integrally moulded laterally on the adjusting lever (23) are one or more protuberances (231) which engage with one or more projections (62) of the stop means (6) producing a resistance that can be overcome, in such a way that at one or more pivot points of the adjusting lever (23) a short pivoting distance having a certain stiffness of movement is produced.

9. Actuating device according to one of Claims 1 to 8, characterised in that the stop means (6) are arranged on a flat frame element (61) which surrounds the pivot path (40) of the adjusting lever (23), the frame element (61) being arranged to be fastened on the valve cartridge housing (2) so as to be synchronously rotatable with the valve member (24).

10. Actuating device according to one of Claims 1 to 9, characterized in that the stop means (6) are each arranged on a spring beam (63) held at both end regions.

11. Actuating device according to one of Claims 1 to 9, characterized in that the stop means (6) are each provided at the end region of a spring arm (64).

12. Actuating device according to one of Claims 9 to 11, characterized in that the frame element (61) is produced in one piece with the stop means (6) from plastics material.

13. Actuating device according to at least one of Claims 1 to 12, characterized in that the adjusting lever (23) is produced in one piece with the protuberances (231) or grooves (232) from plastics material, preferably glass fibre reinforced plastics material.

14. Actuating device according to at least one of Claims 1 to 13, characterized in that a stop ring (3) which can be placed onto the mixing valve cartridge housing (2) in different rotational positions to limit rotation of the adjusting lever (23), and a rotary ring (4) which is arranged on the stop ring (3) and in which a diagonal slot-like aperture is formed as pivot path (40) and non-rotatable coupling of the adjusting lever (23), are provided, the stop means (6) producing a resistance that can be overcome being arranged in the rotary ring (4).

15. Actuating device according to Claim 14, characterized in that the stop means (6) are arranged in the base of a widened region (40a) forming the pivot path for a fixing neck (50) of a handle (5) arranged on the adjusting lever (23), the rotary coupling of the adjusting lever (23) with the rotary ring (4) being effected by way of the fixing neck (50).

16. Actuating device according to Claim 14 or 15, characterized in that the stop means (6) are produced in one piece with the rotary ring from plastics material.

17. Actuating device according to at least one of Claims 1 to 16, characterized in that a sleeve (7) which is arranged to be placed onto the adjusting lever (23) is provided, on which one or more protuberances (731) are arranged which come to bear against the stop means (6) producing a resistance that can be overcome.

18. Actuating device according to Claim 17, characterized in that the sleeve (7) is provided with at least one rib (71), preferably with two parallel ribs (71), which support(s) the sleeve (7) in one direction axially in the region of the axis (21) about which the adjusting lever (23) is pivotable, the sleeve (7) being held in the other axial direction by a handle (5) arranged on the adjusting lever (23).

19. Actuating device according to Claim 17, characterized in that on the sleeve there is integrally formed an insulating bush by which a handle (5) arranged on the adjusting lever (23) is thermally insulated from the adjusting lever (23), the insulating bush being secured axially by the handle (5) fastened on the adjusting lever (23).

20. Actuating device according to one of Claims 17 to 19, characterized in that the sleeve (7) is slotted on a side where no protuberances (731) are provided, so that the sleeve (7) can be snapped radially onto the adjusting lever (23).

21. Actuating device according to one of Claims 17 to 20, characterized in that the adjusting lever (23) is square or rectangular in cross-section and the protuberances (731) are offset on the sleeve (7) with respect to the central axis (20), so that by changing the position of the sleeve (7) by rotation through 180°, two different pivot angles can be obtained for the meeting with the stop means (6).

22. Actuating device according to one of Claims 17 to 21, characterized in that the sleeve (7) is produced in one piece with the protuberances (731) from plastics material by injection-moulding.

23. Actuating device according to at least one of Claims 1 to 22, characterized in that means are provided by which the resilient deflection of the stop means (6) can be suppressed, so that the stop means (6) is able to be used selectively as a fixed stop.

24. Actuating device according to Claim 23, characterized in that as the means for suppressing the deflection of the stop means (6) a small plate (8) is in each case arranged in a free space (41) for the blocking of the deflection.

25. Actuating device according to Claim 24, characterized in that the small plates (8) are produced from plastics material by injection-moulding, there being preferably integrally formed on the small plates (8) locking lugs which in each case secure the respective small plate (8) in the free space (41) in the inserted position.

## Revendications

1. Dispositif de commande d'un mitigeur à un seul levier, notamment pour des conduites d'eau dans le domaine sanitaire, comportant un organe de soupape (24) mobile avec deux degrés de liberté pour définir le rapport de mélange et le débit total, des butées étant prévues pour limiter le mouvement de l'organe de soupape (24), dont au moins une limite est assurée par un moyen de butée (6) qui crée une résistance susceptible d'être vaincue et, pour la commande de la soupape, un levier de réglage (23) est relié à l'organe de soupape (24), sort du boîtier (2) de la cartouche du mitigeur comportant les éléments de soupape, tourne coaxialement à l'axe central (20) et bascule autour d'un axe (21) transversal à l'axe central (20), ce levier ayant une section essentiellement carrée ou rectangulaire,
caractérisé en ce que
le levier de réglage (23) comporte, dans sa zone de sortie du boîtier (2) de la cartouche du mitigeur, au moins un taquet (231) latéralement en saillie de la trajectoire de basculement (40) du levier de réglage (23) ou au moins une rainure (232) passant latéralement dans cette trajectoire de basculement, et coopérant avec un ou plusieurs moyens de butée (6) générant la résistance susceptible d'être vaincue, en étant situé à l'extérieur du boîtier de la cartouche de mitigeur (2), les moyens de butée (6) pénétrant élastiquement et latéralement dans la trajectoire de basculement (40) d'au moins un taquet (231) ou d'une rainure (232) dans le levier de réglage (23).

2. Dispositif de manoeuvre selon la revendication 1,
caractérisé en ce que
les moyens de butée (6) générant une résistance sont prévus des deux côtés de la trajectoire de basculement (40), par paire, de préférence sur une bague tournante (4).

3. Dispositif de manoeuvre selon la revendication 1 ou 2,
caractérisé en ce que
le levier de réglage (23) comporte plusieurs taquets (231) qui s'appuient, dans une ou plusieurs positions angulaires définies, contre l'un des moyens de butée (6) générant une résistance susceptible d'être vaincue.

4. Dispositif de manoeuvre selon des revendications 1 à 3,
caractérisé en ce que
les moyens de butée (6) générant une résistance susceptible d'être vaincue comportent chaque fois au moins une partie en saillie (62) élastique.

5. Dispositif de manoeuvre selon la revendication 4,
caractérisé en ce que
la partie en saillie (62) peut être mise en prise avec l'une ou plusieurs des rainures (232) prévues dans les surfaces latérales du levier de réglage (23).

6. Dispositif de manoeuvre selon la revendication 4 ou 5,
caractérisé en ce que
la partie en saillie (62) a une section triangulaire dont la pointe fait un angle (620) compris entre 45° et 135°, et de préférence égal à 90°.

7. Dispositif de manoeuvre selon la revendication 6,
caractérisé en ce que
la surface (622) du moyen de butée (6) qui arrive en appui au cours de l'opération d'ouverture, présente un angle (621) compris entre 30° et 90° et égal de préférence à 60°, par rapport à la trajectoire de basculement (40).

8. Dispositif de manoeuvre selon au moins l'une des revendications 1 à 7,
caractérisé en ce que
sur le levier de réglage (23), latéralement, on a formé un ou plusieurs taquets (231) qui viennent en prise avec une ou plusieurs parties en saillie (62) des moyens de butée (6) générant une résistance susceptible d'être vaincue, de façon qu'en un ou plusieurs points de basculement du levier de réglage (23), il s'établisse un court chemin de basculement correspondant à un passage difficile .

9. Dispositif de manoeuvre selon l'une des revendications 1 à 8,
caractérisé en ce que
les moyens de butée (6) sont prévus sur un élément de châssis (61) plat qui entoure la trajectoire de basculement (40) du levier de réglage (23), l'élément de châssis (61) étant fixé de manière à tourner en synchronisme avec l'organe de soupape (24) sur le boîtier (2) de la cartouche de soupape.

10. Dispositif de manoeuvre selon l'une des revendications 1 à 9,
caractérisé en ce que
les moyens de butée (6) sont chaque fois prévus sur une poutre à ressort (63) maintenue dans l'une des deux zones d'extrémité.

11. Dispositif de manoeuvre selon l'une des revendications 1 à 9,
caractérisé en ce que
les moyens de butée (6) sont prévus chaque fois dans la zone d'extrémité d'une jambe élastique (64).

12. Dispositif de manoeuvre selon l'une des revendications 1 à 9,
caractérisé en ce que
l'élément de châssis (61) est réalisé en matière synthétique d'une seule pièce avec les moyens de butée (6).

13. Dispositif de manoeuvre selon l'une des revendications 1 à 12,
caractérisé en ce que
le levier de réglage (23) est réalisé d'une seule pièce avec les taquets (231) ou les rainures (232), en matière plastique et de préférence en matière plastique renforcée par des fibres de verre.

14. Dispositif de manoeuvre selon l'une des revendications 1 à 13,
caractérisé par
une bague de butée (3) qui peut être engagée dans différentes positions de rotation sur le boîtier (2) de la cartouche du mitigeur pour limiter le mouvement de rotation du levier de réglage (23), et une bague de rotation (4) montée sur la bague de butée (3), dans laquelle est réalisé un passage en forme de fente en diagonale comme trajectoire de basculement (40) et une liaison solidaire en rotation du levier de réglage (23), les moyens de butée (6) qui génèrent une résistance susceptible d'être vaincue étant prévus dans la bague tournante (4).

15. Dispositif de manoeuvre selon la revendication 14,
caractérisé en ce que
les moyens de butée (6) sont prévus au fond d'une zone (40a) élargie formant la trajectoire de basculement pour un col de fixation (50) d'une poignée (5) prévue sur le levier de réglage (23), la liaison en rotation entre le levier de réglage (23) et la bague tournante (4) se faisant par le col de fixation (50).

16. Appareil de manoeuvre selon la revendication 14 ou 15,
caractérisé en ce que
les moyens de butée (6) sont réalisés en matière synthétique d'une seule pièce avec la bague tournante.

17. Appareil de manoeuvre selon l'une au moins des revendications 1 à 16,
caractérisé par,
une douille (7) susceptible d'être enfilée sur le levier de réglage (23) et munie d'un ou plusieurs taquets (731) arrivant en appui contre le moyen de butée (6) pour générer une résistance susceptible d'être vaincue.

18. Dispositif de manoeuvre selon la revendication 17,
caractérisé en ce que
la douille (7) est munie d'au moins une entretoise (71) et de préférence deux entretoises (71) parallèles, et en ce que ces entretoises soutiennent la douille (7) dans une direction, axialement, dans la zone de l'axe (21) autour duquel bascule le levier de réglage (23), la douille (7) étant maintenue dans l'autre direction axiale par une poignée (5) portée par le levier de réglage (23).

19. Dispositif de manoeuvre selon la revendication 17,
caractérisé par
un manchon isolant formé en une seule pièce sur la douille et qui assure l'isolation thermique, par rapport au levier de réglage (23) d'une poignée (5) portée par le levier de réglage (23), le manchon isolant étant fixé axialement par la poignée (5) fixée sur le levier de réglage (23).

20. Dispositif de manoeuvre selon l'une des revendications 17 à 19,
caractérisé en ce que
la douille (7) est fendue d'un côté, là où il n'y a pas de taquets (731), de sorte que la douille (7) puisse s'enclipser radialement sur le levier de réglage (23).

21. Dispositif de manoeuvre selon l'une des revendications 17 à 20,
caractérisé en ce que
le levier de réglage (23) a une section carrée ou rectangulaire et les taquets (731) sont décalés par rapport à l'axe (20) sur la douille (7) de façon qu'en inversant la douille (7) par une rotation de 180°, on puisse arriver à deux angles de basculement différents pour la butée contre le moyen de butée (6).

22. Dispositif de manoeuvre selon l'une des revendications 17 à 21,
caractérisé en ce que
la douille (7) est réalisée en une seule pièce avec les taquets (731), en matière synthétique, par injection.

23. Dispositif de manoeuvre selon au moins l'une des revendications 1 à 22,
caractérisé par
des moyens permettant de loger le débattement élastique du moyen de butée (6) pour permettre d'utiliser au choix le moyen de butée (6) comme butée fixe.

24. Dispositif de manoeuvre selon la revendication 23,
caractérisé en ce que
le moyen logeant le débattement du moyen de butée (6) est chaque fois une plaquette (8) dans un intervalle libre (41), pour bloquer le débattement.

25. Dispositif de manoeuvre selon la revendication 24,
caractérisé en ce que
les plaquettes (8) sont réalisées en matière synthétique par injection et, de préférence, des becs d'accrochage sont formés sur les plaquettes (8), ces becs fixant chaque fois la plaquette (8) dans l'intervalle libre (41), en position engagée.
